Europäisches Patentamt

(19) European Patent Office

Office européen des brevets

(11) Numéro de publication: **0 187 588**
**B1**

(12) **FASCICULE DE BREVET EUROPEEN**

(45) Date de publication du fascicule du brevet: **05.09.90**

(21) Numéro de dépôt: **85402519.4**

(22) Date de dépôt: **17.12.85**

(51) Int. Cl.⁵: **G 01 S 13/22,** G 01 S 13/528, G 01 S 7/28

(54) **Procédé d'adaptation de la post-intégration dans un radar à fréquences de récurrence commutées et circuit mettant en oeuvre ce procédé.**

(30) Priorité: **21.12.84 FR 8419648**

(43) Date de publication de la demande:
**16.07.86 Bulletin 86/29**

(45) Mention de la délivrance du brevet:
**05.09.90 Bulletin 90/36**

(84) Etats contractants désignés:
**DE GB IT NL SE**

(56) Documents cités:
**FR-A-2 041 129**
**FR-A-2 412 852**
**US-A-3 765 017**

(73) Titulaire: **THOMSON-CSF**
**51, Esplanade du Général de Gaulle**
**F-92800 Puteaux (FR)**

(72) Inventeur: **Lacomme, Philippe**
**THOMSON-CSF SCPI 51,Esplanade du Général de Gaulle**
**F-92800 Puteaux (FR)**

(74) Mandataire: **Benoit, Monique et al**
**THOMSON-CSF SCPI**
**F-92045 PARIS LA DEFENSE CEDEX 67 (FR)**

Courier Press, Leamington Spa, England.

## Description

L'invention concerne un procédé et un circuit d'adaptation de la post-intégration dans un radar Doppler à fréquences de récurrence commutées.

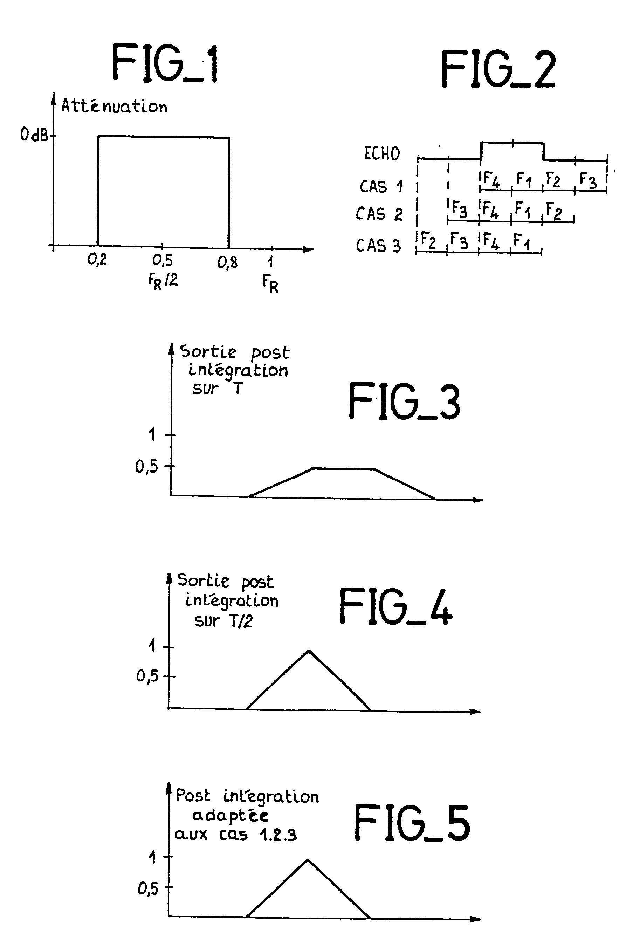

Dans un radar BFR (Basse Fréquence), la fréquence de récurrence relativement basse implique au filtre Doppler utilisé en basse altitude d'avoir un gabarit (tel que représenté en figure 1) dont le rapport entre la zone de réjection et la zone passante est élevé (40%). Pour éviter qu'un nombre important de cibles aériennes dont la vitesse ambiguë correspond à la zone de réjection du filtre ne soit pas détectées, on fait varier la fréquence de récurrence FR pendant le temps d'éclairement de la cible ce qui déplace les fréquences ambiguës des cibles, sans perturber les échos dont la fréquence est inférieure à FR/2.

Toutes les cibles aériennes sont alors détectées pendant une fraction du temps d'éclairement correspondant aux fréquences de récurrence telles que leurs fréquences ambiguës tombent dans la zone passante du filtre. Il s'ensuite que l'écho est découpé, et donc que la post-intégration classique n'est pas adaptée à ce type d'écho.

En effet, selon la technique connue, la post-intégration est basée:

—soit sur un temps d'éclairement total, ce qui entraîne des pertes lorsque la cible n'apparaît en sortie du filtre Doppler que pendant une fraction faible du temps d'éclairement,

—soit sur une fraction moyenne ou faible de ce temps d'éclairement, ce qui entraîne une perte lorsque l'écho est présentant pendant une fraction importante de ce temps d'éclairement.

On trouvera un exemple d'un tel dispositif dans le document US 3 765 017.

On constate donc, d'une part une perte de détection importante, et d'autre part une représentation de médiocre qualité sur l'indicateur (l'écho apparaît en pointillé sur l'écran).

Il est donc important d'étudier et d'essayer des dispositifs permettant de pallier ces inconvénients.

L'invention vise à pallier les inconvénients précédemment cités en adaptant le type de post-intégration au signal utile réellement reçu après le filtre Doppler.

L'invention concerne donc un procédé d'adaptation de la post-intégration dans un radar à fréquences de récurrences commutées tel que défini dans la revendication 1.

L'invention concerne également un circuit d'adaptation de la post-intégration dans un radar à fréquences de récurrences commutées tel que défini dans les revendications 2 et 4.

Les différents objets et caractéristiques de l'invention apparaîtront mieux à la lecture de la description qui va suivre, faite à titre d'exemple en se reportant aux figures annexées qui représentent:

—la figure 1, un exemple de gabarit de filtre Doppler;

—les figures 2 à 9, des courbes de signaux d'échos obtenues à partir de systèmes connus;

—la figure 10, un exemple de réalisation des circuits de l'invention;

—la figure 11, un exemple de réalisation d'une variante de l'invention;

—la figure 12, un exemple de réalisation d'une autre variante de l'invention.

L'élimination des trous de vitesse impose de faire varier la fréquence FR au cours du temps de passage T du faisceau sur la cible, alors que l'élimination des échos fixes du second balayage, permise par la cohérence de l'émetteur, nécessite de maintenir FR constant. Un compromis est obtenu en divisant le temps de passage T en n blocs égaux, où n est le nombre minimum de valeurs de FR permettant de combler tous les trous de vitesse. La fréquence de récurrence sera commutée, de manière cyclique tous les T/n secondes, et prendra successivement n valeurs $F_i$.

Par exemple, dans la suite de la description, on choisira quatre fréquences: F1, F2, F3 et F4 commutées toutes les 20 ms.

Soit $f_d$ la fréquence Doppler d'une cible mesurée par rapport au Doppler des échos de sol et supposée constante pendant le temps d'éclairement T, et $F_i$ la fréquence de récurrent instantanée. La fréquence Doppler réduite est:

$$f_i = \frac{f_d \text{ modulo } F_i}{F_i} = \text{partie décimale } \left( \frac{f_d}{F_i} \right)$$

Le gabarit du filtre étant de forme rectangulaire, en peut associer à $f_i$ un nombre $a_i$ tel que:

$a_i = 0$ si $F_i$ est dans la zone de réjection du filtre

$a_i = 1$ dans le cas contraire.

Pour chaque valeur de $f_d$ on peut calculer les quatre valeurs de $a_i$ correspondant aux quatre fréquences $F_i$, ce qui indique, en première approximation comment apparaîtra la cible en sortie du filtre Dopper, et à l'entrée de la poste-intégration.

Sur les figures 2 à 9, on a représenté différents cas d'intégration en portant le temps en abscisses et les niveaux des signaux en ordonnées.

Si 1 est la valeur normalisée atteinte par un écho lorsqu'il est dans la bande passante du filtre, l'amplitude de l'écho varie au cours d'un balayage suivant la séquence $a_i$, $a_{i+1}$, $a_{i+2}$, $a_{i+3}$ avec quatre fréquences de récurrence.

# EP 0 187 588 B1

Par example, un écho peut apparaître sous une des quatre formes suivantes:

cas 1: 1100
cas 2: 0110
cas 3: 0011
cas 4: 1001

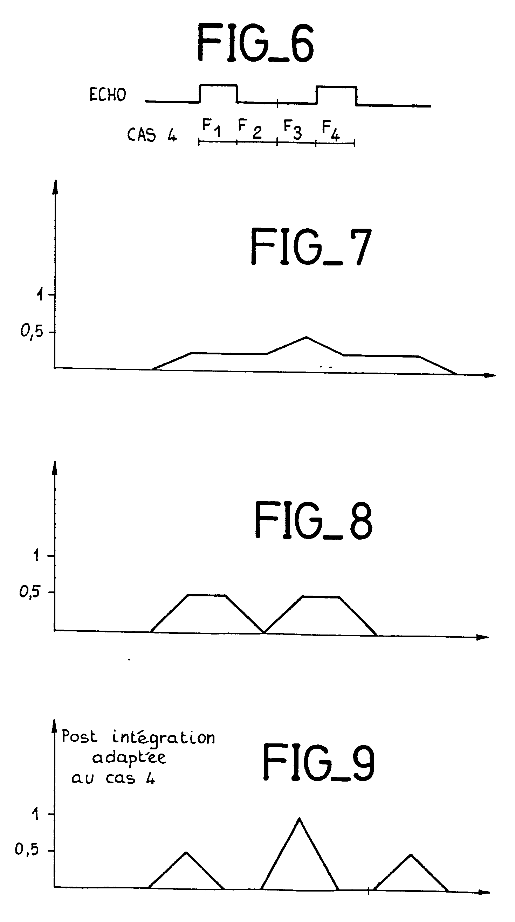

Les trois premières formes sont représentées en figure 2 et la quatrième forme en figure 6.

Une post-intégration classique, adaptée au temps de passage T, réalise la corrélation entre le signal incident et un créneau de largeur T. Pour l'écho considéré, les résultats sont différents dans les cas 1, 2, 3 (figure 3) où la sortie atteint la valeur 1/2 (par rapport à la valeur qui serait atteinte pour 1111) et le cas 4 où le signal de sortie se compose d'un pic d'amplitude 1/2 (figure 7).

Une post-intégration adaptée à T/2 donne un pic unique d'amplitude 1 dans les cas 1, 2, 3 comme cela est représenté en figure 4, et deux pics d'amplitude 1/2 pour le cas 4 tel que représenté en figure 8. Dans ce cas, la puissance de bruit est deux fois plus forte que dans le premier cas.

Si on exprime les résultats en rapport signal à bruit, rapporté au cas de référence, pour un écho 1111 on obtient:

—en intégration sur T,    cas 1, 2, 3: S/B=−6 dB écho large cas 4: S/B=−6 dB écho étroit

—en intégration sur T/2,    cas 1, 2, 3: S/B=−3 dB un seul pic cas 4: S/B=−9 dB deux pics

Pour un écho apparaissant seulement pendant T/2 la perte minimale théorique est −3 dB.

Pour une post-intégration adaptée à T la perte est donc de 3 dB par rapport à la valeur optimale.

Pour une post-intégration adaptée à T/2, la perte est nulle pour les cas 1, 2, 3 mais elle est de 6 dB pour le cas 4.

Pour adapter la post-intégration au cas 4, il faudrait faire la somme de $a_1$ et $a_4$, c'est-à-dire faire la corrélation du signal du cas 4 avec la séquence 1001.

Dans ce cas le pic d'amplitude aurait une amplitude de 1 correspondant au cas optimal (mais serait désadapté dans les autres cas).

La figure 9 montre que l'écho, à la sortie du filtre adapté, peut présenter des pics dus aux lobes secondaires de la corrélation, ce qui pourrait dégrader la qualité de la représentation. En fait ces lobes secondaires correspondent à une position relative écho-faisceau pour laquelle la post-intégration considérée est désadaptée: dans ce cas il existe au moins une combinaison adaptée à cet état qui donne un niveau supérieur. De même pour chaque position d'écho il existe une combinaison adaptée, donc si les lobes secondaires ont un niveau suffisant pour être vus, l'écho sera également vu pour les positions intermédiaires: il sera présenté sous forme d'un trait unique sans discontinuité.

Les circuits de l'invention sont utilisés tous les T/4. Il y a environ 1 000 quanta distance à traiter un près de 20 ms ce qui donne un temps de cycle de calcul de 20 µs.

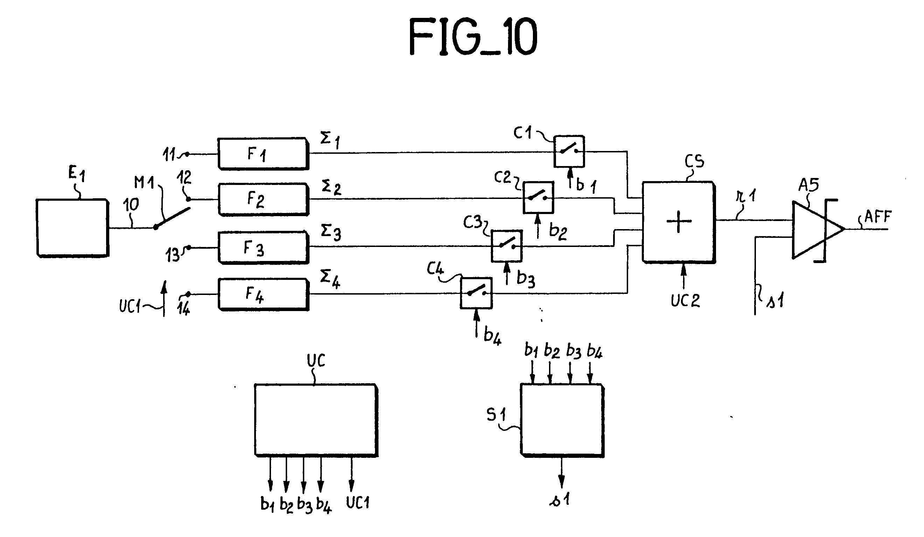

En se reportant aux figures 10 à 12 on va donc décrire le système de l'invention permettant d'adapter la post-intégration à un système à fréquences de récurrences commutées.

La figure 10 fournit un exemple de réalisation du circuit de l'invention permettant d'adapter la post-intégration.

Sur cette figure, on trouve un circuit de réception radar E1 fournissant sur une liaison de sortie 10, une valeur de signal reçu. Cette liaison de sortie 10 est connectée à l'entrée d'un commutateur M1 (ou multiplexeur) permettant de connecter successivement la liaison 10 aux sorties 11, 12, 13, 14 vers les entrées des registres de sommation F1, F2, F3 et F4.

On dispose d'autant de registres de sommation (F1 à F4) qu'il est prévu de fréquences de récurrence, c'est-à-dire quatre selon l'exemple pris.

Le commutateur M1 est commuté d'une position de sortie (11 par exemple) à la suivante (12 selon l'exemple pris) à chaque commutation de fréquence de récurrence sous la commande d'un signal UC1 fourni par une unité de commande UC.

Chaque registre de sommation, qui comporte autant de cases en mémoire qu'il y a de quanta distance dans le domaine, effectue la somme du signal issu du récepteur, pendant une durée de T/4 correspondant à la période telle que $F_R=F_I$: cette sommation est effectuée cycliquement, le registre étant remis à zéro à chaque cycle.

Au moment de la commutation de $F_R$ on dispose en sortie de quatre information $\Sigma_1, \Sigma_2, \Sigma_3, \Sigma_4$, qui représentent les sommes partielles correspondant à une durée T, ces informations étant renouvelées tous les T/4.

Aux sorties $\Sigma 1$ à $\Sigma 4$, des registres de sommation (F1 à F4) est connecté par l'intermédiaire de commutateurs C1 à C4 un circuit de sommation CS. Un circuit d'élaboration de signaux de niveaux de seuil

3

S1 est également connecté aux sorties $\Sigma 1$ à $\Sigma 4$.

Une unité de commande UC fournit différents signaux de commande UC1, UC2, b1, b2, b3 et b4.

Le signal UC1 commande la commutation du commutateur M1 d'une position à la suivante à chaque changement de fréquence de récurrence.

Les signaux b1 à b4 sont fournis sous forme d'une série de combinaisons successives de signaux et commandent la fermeture des commutateurs C1 à C4, de telle façon que chaque combinaison permette la fermeture de un ou plusieurs commutateurs.

Chaque combinaison de signaux b1 à b4 est également fournie au circuit d'élaboration de signaux de niveaux de seuil S1 qui fournit en réponse un signal s1 dont le niveau correspond au nombre de signaux (b1 à b4) fourni.

Le signal UC2 est fourni, à chaque combinaison de signaux b1 à b4, au circuit de sommation CS.

Le circuit de sommation CS effectue la somme des signaux $\Sigma 1$ à $\Sigma 4$ reçus des registres de sommation F1 à F4 par l'intermédiaire des commutateurs C1 à C4.

Le circuit de sommation CS fournit un signal r1, représentant la somme des signaux $\Sigma 1$ à $\Sigma 4$. Le signal r1 ainsi que le signal s1 sont appliqués aux entrées d'un circuit comparateur A5 qui fournit un signal, sur une sortie AFF vers des circuits d'utilisation non représentés, si le signal r1 est de niveau supérieur à celui du signal s1.

De ce fait, le circuit de la figure 10 effectue donc bien une post-intégration des signaux adaptée à la combinaison des signaux reçus.

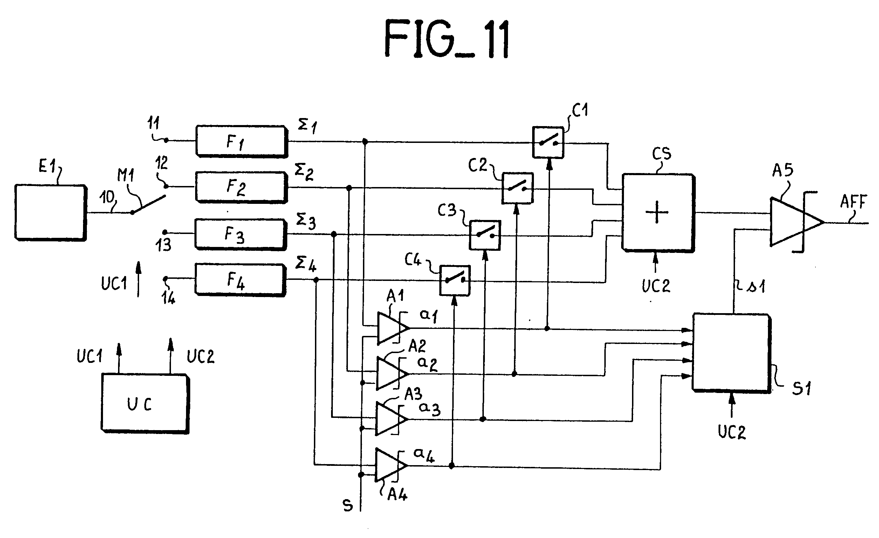

En se reportant à la figure 11, on va maintenant décrire une variante de réalisation du circuit de l'invention.

En effet, le circuit précédent était basé sur le fait que l'on ne connaissait pas le type d'écho reçu, c'est-à-dire la séquence $a_i$.

La variante de réalisation de la figure 11 prévoit un circuit permettant de détecter la séquence de $a_i$ traitée.

La fonction réalisée sera alors beaucoup plus simple que dans le cas précédent puisqu'il suffit de sélectionner, en fonction des $a_i$, le type de somme à faire et le seuil à placer.

Sur la figure 11, on retouve le circuit de réception E1, le commutateur M1, les registres de sommation M1, le circuit de sommation CS et le circuit d'élaboration de signaux de niveaux de seuil S1.

De plus, des circuits à seuil A1, A2, A3 et A4 sont connectés aux sorties des registres de sommation F1, F2, F3 et F4 respectivement. Chacun d'eux compare le niveau du signal $\Sigma 1$ à $\Sigma 4$ qu'il reçoit à un signal S de niveau déterminé et fournit un signal de valeur binaire 1 ou 0 sur sa sortie a1 à a4 selon que le niveau du signal reçu est supérieur ou non au niveau du signal S.

Les sorties des registres de sommation F1 à F4 sont, par ailleurs, connectées aux entrées du circuit de sommation CS par l'intermédiaire de commutateurs C1 à C4 respectivement, ces commutateurs reçoivent les signaux fournis sur les sorties a1 à a4 des circuits à seuil F1 à F4. Un signal de valeur binaire 1 sur une sortie a1 à a4 commande la fermeture du commutateur C1 à C4 correspondant. Dans ces conditions, seuls les signaux $\Sigma 1$ à $\Sigma 4$ ayant un niveau suffisant sont transmis au circuit de sommation CS, ce qui permet d'éliminer les bruits reçus.

Les sorties a1 à a4 sont également connectées aux entrées du circuit d'élaboration de signaux de niveaux de seuil CS. Celui-ci fournit sur une sortie s1, un signal pouvant prendre quatre valeurs possibles selon le nombre de sorties a1 à a4 trouvées au niveau logique 1.

Le circuit des sommations CS fournit un signal de sommation des signaux $\Sigma 1$ à $\Sigma 4$ qu'il reçoit. Ce signal de sommation est transmis à une entrée d'un circuit comparateur A5 dont une autre entrée est connectée à la sortie s1. Le circuit comparateur A5 fournit un signal de niveau déterminé sur une sortie AFF, vers des circuits d'utilisation no représentés, lorsque le niveau du signal de sommation est supérieur au niveau du signal reçu de la sortie s1.

Comme dans l'exemple de la réalisation de la figure 10, les circuits sont ici commandés par une unité de commande UC délivrant des signaux de commande UC1 et UC2. Le signal UC1 commande le commutateur M1 et le signal UC2 commande le circuit de sommation CS et le circuit d'élaboration de niveau de seuil S1.

Dans ces conditions, l'exemple de réalisation de la figure 11 permet de détecter les fréquences de récurrence pour lesquelles il y a prédétection de signal et donc de reconnaître la forme du signal reçu issu des circuits de réception E1. Ensuite, il permet de faire une poste-intégration adaptée à cette forme par fermeture des commutateurs C1 à C4 appropriés, puis de placer un seuil de détection adapté lui-même (circuit S1) au type de post-intégration effectuée. Les pertes sont ainsi minimisées.

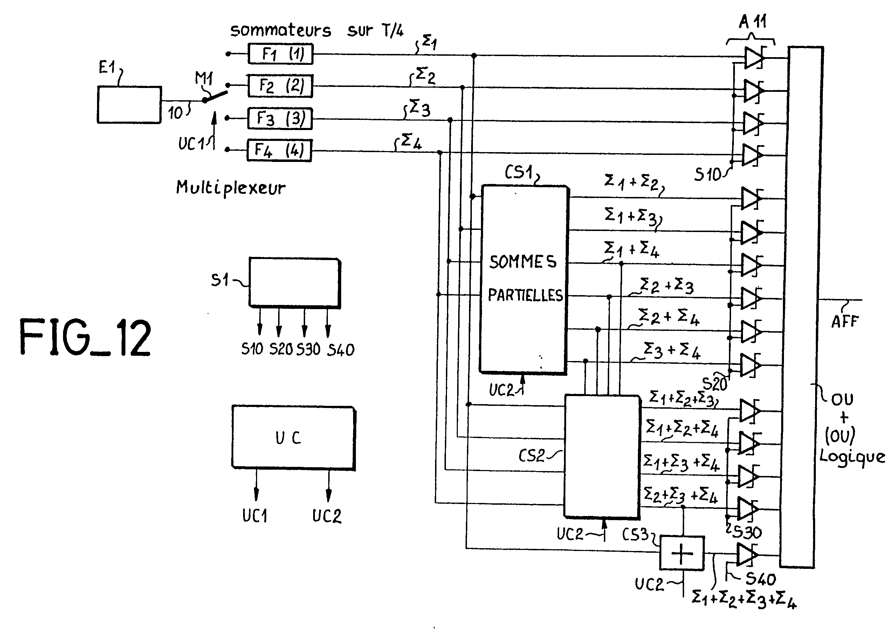

En se reportant à la figure 12, on va maintenant décrire un exemple d'une autre variante de réalisation permettant de mettre en oeuvre l'invention.

Selon cette variante, on ignore la forme du signal reçu comme dans la variante de réalisation de la figure 10. Par contre, on va effectuer les opérations de comparaison et de sommation simultanément donc en parallèle et non séquentiellement comme dans le système de la figure 10.

La première partie du circuit comporte les circuits de réception E1, le commutateur M1, quatre registres de sommation F1 à F4 affectés à chaque fréquence de récurrence.

Aux sorties des registres F1 à F4 sont connectés des circuits de sommation CS1, CS2 et CS3. Le circuit de sommation CS1 effectue la combinaison deux à deux des informations $\Sigma 1$, $\Sigma 2$, $\Sigma 3$, $\Sigma 4$ et fournit la somme des signaux de chaque combinaison sur des liaisons spécifiques ($\Sigma 1+\Sigma 2$) à ($\Sigma 3+\Sigma 4$). Ce qui donne six résultats de sommes.

Le circuit CS2 effectue la combinaison trois à trois des informations $\Sigma 1$ à $\Sigma 4$ et fournit la somme des signaux de chaque combinaison sur des liaisons ($\Sigma 1+\Sigma 2+\Sigma 3$) à ($\Sigma 2+\Sigma 3+\Sigma 4$), ce qui donne quatre résultats.

Enfin, un circuit CS3 effectue la somme des signaux $\Sigma 1$ à $\Sigma 4$ et fournit un signal résultant sur une liaison $\Sigma 1+\Sigma 2+\Sigma 3+\Sigma 4$.

Les différentes liaisons de sortie des circuits de sommation CS1 à CS3 ainsi que les liaisons $\Sigma 1$ à $\Sigma 4$ sont connectées à des circuits comparateur A11. Ayant au total quinze liaisons, on doit disposer de quinze circuits comparateurs A11.

Par ailleurs, un circuit d'élaboration de signaux de niveaux de seuil S1 fournit quatre signaux de seuil S10, S20, S30, S4.

Le signal de seuil S10 correspond à la réception d'un seul signal $\Sigma i$. Il est appliqué aux circuits comparateurs A11 auxquels sont connectées les liaisons $\Sigma 1$ à $\Sigma 4$.

Le signal de seuil S20 correspond à la réception de deux signaux $\Sigma i$. Il est appliqué aux circuits comparateurs A11 auxquels sont connectées les liaisons de sortie du circuit de sommation CS1.

Le signal de seuil S30 correspond à la réception de trois signaux $\Sigma i$. Il est appliqué aux circuits comparateurs A11 auxquels sont connectées les liaisons de sortie du circuit de sommation CS2.

Enfin, le signal de seuil S40 correspond à la réception de quatre signaux $\Sigma i$. Il est appliqué au circuit comparateurs A11 auquel est connectée la liaison de sortie du circuit de sommation CS3.

Ces informations $\Sigma 1$ à $\Sigma 4$ sont donc combinées entre elles pour former quinze sommes, correspondant aux quinze combinaisons possibles. Le résultat de chaque somme est comparé à un seuil qui dépend du nombre de sommations effectuées.

Les sorties des circuits comparateurs A11 sont connectées aux entrées d'un circuit OU possédant quinze entrées et fournissant un signal de niveau logique 1 sur une sortie AFF lorsqu'un circuit à seuil au moins fournit un signal indiquant qu'une combinaison a dépassé le seuil auquel il est comparé.

La somme logique des quinze sorties constitue le signal de détection qui est renouvelé tous les T/4.

## Revendications

1. Procédé d'adaptation de la post-intégration dans un radar à fréquences de récurrence commutées, comportant n fréquences de récurrence, dans lequel on fournit sur n liaisons ($\Sigma 1$ à $\Sigma 4$) des signaux de détection pour chaque fréquence de récurrence, caractérisé en ce qu'il comporte les phases suivantes:
   —identification des liaisons fournissant un signal de détection supérieur à un niveau de seuil donné;
   —sommation des signaux de détection avec exclusion de tout signal présent sur une liaison ($\Sigma 1$ à $\Sigma 4$) ne fournissant pas de signal de détection;
   —élaboration d'un signal de niveau de seuil en fonction du nombre de liaisons identifiées;
   —comparaison du signal résultant de la sommation des signaux au signal de niveau de seuil et fourniture d'un signal de sortie lorsque ledit signal de sommation est supérieur au signal de niveau de seuil.

2. Circuit d'adaptation de la poste-intégration dans un radar à fréquences de récurrence commutées, comprenant des circuits de réception d'antenne (E1) fournissant sur une liaison de sortie (10) un signal reçu,
   —et un premier commutateur (M1) possédant une entrée connectée à la liaison (10) des circuits de réception (E1) et un nombre déterminé de sorties (11 à 14) correspondant chacune à une fréquence de récurrence du radar, ledit premier commutateur (M1) permettant de connecter son entrée à la sortie (11 à 14) correspondant à la fréquence de récurrence en cours;
   ledit circuit d'adaptation étant caractérisé en ce qu'il comporte:
   —un registre de sommation (F1 à F4) connecté à chaque sortie (11 à 14) et fournissant sur une sortie un signal de sommation;
   —des deuxièmes commutateurs (C1 à C4), chaque deuxième commutateur étant connecté à chaque registre de sommation (F1 à F4) et rendu passant lorsque le registre de sommation correspondant fournit un signal supérieur à un niveau donné;
   —un circuit d'élaboration (S1) de signaux de niveaux de seuil recevant des signaux d'entrés correspondant aux signaux de sommation supérieurs au niveau donné et fournissant en échange un signal de niveau de seuil correspondant au nombre desdits signaux d'entrée;
   —un circuit de sommation (CS) connecté par les commutateurs (C1 à C4) aux sorties des registres de sommation (F1 à F4), effectuant une sommation des signaux fournis sur les sorties des registres de sommation (F1 à F4) et fournissant des résultats d'intégration;
   —un circuit comparateur (A5) connecté d'une part au circuit de sommation CS, recevant les résultats d'intégration, et, d'autre part au circuit d'élaboration (S1) de signaux de niveau de seuil, et fournissant un signal de sortie lorsqu'un résultat d'intégration excède la valeur du niveau de seuil correspondant au nombre de sorties de récurrence ayant fourni un signal de sommation détecté;
   —une unité de commande (UC) fournissant des signaux de commande et commandant le fonctionnement du premier commutateur (M1), du circuit d'élaboration (S1) de signaux de niveau de seuil et du circuit de sommation (CS).

3. Circuit d'adaptation de la post-intégration dans un radar à fréquence commutée selon la revendication 2, caractérisé en ce qu'il comporte:

—connecté à la sortie de chaque registre de sommation (F1 à F4), un signal comparateur (A1 à A4) comparant le niveau du signal de sommation au niveau donné et fournissant un signal de commande (0 ou 1) indiquant les fréquences de récurrence pour lesquelles il y a prédétection;

—des commutateurs (C1 à C4) commandés chacun par un signal de commande et permettant de connecter les sorties des registres de sommation (F1 à F4) au circuit de sommation (CS);

—le circuit d'élaboration (S1) de signaux de niveaux de seuil étant également commandé par les signaux de commande des circuits comparateurs (A1 à A4) et fournissant sur une sortie (S1) un signal dont le niveau dépend du nombre de signaux de commande reçus, ladite sortie (S1) étant connectée au circuit comparateur (A5).

4. Circuit d'adaptation de la post-intégration dans un radar à fréquences de récurrence commutée comportant $n$ fréquences de récurrences, comprenant des circuits de réception d'antenne (E1) fournissant sur une liaison de sortie (10) un signal reçu,

et un premier commutateur (M1) possédant une entrée connectée à la liaison (10) des circuits de réception E1 et un nombre déterminé de sorties (11 à 14) correspondant chacune à une fréquence de récurrence du radar, ledit premier commutateur (M1) permettant de connecter son entrée à la sortie (11 à 14) correspondant à la fréquence de récurrence en cours;

ledit circuit d'adaptation étant caractérisé en ce qu'il comporte:

—un registre de sommation (F1 à F4) connecté à chaque sortie (11 à 14) et fournissant sur une sortie un premier signal de sommation;

—une série de $n-1$ circuits de sommation (CS1, CS2, CS3) possédant autant d'entrées qu'il y a de registres de sommation (F1 à F4), connectées chacunes à la sortie d'un registre de sommation, un circuit de sommation (CS1, CS2, CS3) de rang p, avec p variant de 2 à n, effectuant la somme de $p$ signaux parmi les $n$ deuxièmes signaux de sommation fournis par les registres de sommation (F1 à F4) et fournissant ainsi des deuxièmes signaux de sommation sur:

$$\frac{n(n-1)\ldots(n-p+1)}{p!} \text{ sorties}$$

—des ensembles de circuits comparateurs (A11) connectés aux sorties de chaque circuit de sommation (CS1, CS2, CS3), chacun de ces ensembles comportant autant de circuits comparateurs que le circuit de sommation correspondant possède de sorties, les circuits comparateurs d'un ensemble recevant par ailleurs un signal de niveau de seuil (S20, S30) dont la valeur est propre à l'ensemble considéré et détermine le fonctionnement des dits circuits comparateurs recevant des circuits de sommation les deuxièmes signaux de sommation et délivrant alors chacun un signal lorsque le deuxième signal de sommation qu'il reçoit excède le signal de niveau de seuil (S20, S30);

—un ensemble de $n$ circuit comparateurs (A11) connectés chacun à une sortie (Σ1 à Σ4) d'un registre de sommation (F1 à F4), chacun de ces circuits comparateurs recevant par ailleurs un signal de niveau de seuil (S10) déterminé, permettant son fonctionnement lorsque le registre de sommation fournit sur la sortie correspondante un premier signal de sommation de niveau supérieur au niveau de seuil et délivrant un signal lorsque ce deuxième signal de sommation excède ce dit signal de niveau de seuil (S10);

—une porte OU logique connecté à tous les circuits comparateurs (A11) et fournissant un signal de sortie de post-intégration (AFF) lorsqu'un circuit comparateur au moins fonctionne et délivre un signal de sortie.

**Patentansprüche**

1. Verfahren zur adaptiven Postintegration bei einem Radargerät mit umgeschalteten Folgefrequenzen, mit n Pulsfrequenzen, in dem über n Verbindungen (Σ1 bis Σ4) für jede Folgefrequenz Erfassungssignale geliefert werden, dadurch gekennzeichnet, daß es die folgenden Phasen umfaßt:

—Identifizierung derjenigen Verbindungen, die ein über einem gegebenen Schwellenpegel liegendes Erfassungssignal liefern;

—Summierung der Erfassungssignale unter Ausschluß eines jeden Signals, das an einer kein Erfassungssignal liefernden Verbindung (Σ1 bis Σ4) anliegt;

—Entwicklung eines Schwellenpegelsignals als Funktion der Anzahl der identifizierten Verbindungen;

—Vergleichung des aus der Summierung der Signale sich ergebenden Signals mit dem Schwellenpegelsignal und Lieferung eines Ausgangssignals, wenn das Summierungssignal über dem Schwellenpegelsignal liegt.

2. Schaltung zur adaptiven Postintegration bei einem Radargerät mit umgeschalteten Folgefrequenzen, mit Antennenempfangsschaltungen (E1), die an eine Ausgangsverbindung (10) ein Empfangssignal liefern, und einem ersten Umschalter (M1), der einen mit der Verbindung (10) der Empfangsschaltungen (E1) verbundenen Eingang und eine bestimmte Anzahl von jeweils einer Folgefrequenz des Radars entsprechenden Ausgängen (11 bis 14) besitzt und der eine Verbindung seines Eingangs mit dem der momentanen Folgefrequenz entsprechenden Ausgang (11 bis 14) erlaubt; wobei die Adaptionsschaltung dadurch gekennzeichnet ist, daß sie umfaßt:

—ein jeweils mit einem Ausgang (11 bis 14) verbundenes und an einem Ausgang ein Summierungssignal bereitstellendes Summierungsregister (F1 bis F4);

—zweite Umschalter (C1 bis C4), von denen jeder jeweils mit einem Summierungsregister (F1 bis F4) verbunden ist und auf Durchlaß geschaltet bleibt, wenn das entsprechende Summierungsregister ein oberhalb eines gegebenen Pegels liegendes Signal liefert;

—eine Schaltung (S1) zur Entwicklung von Schwellenpegelsignalen, die diejenigen Eingangssignale empfängt, die den über einem gegebenen Pegel liegenden Summierungssignalen entsprechen, und die im Austausch ein der Anzahl der Eingangssignale entsprechendes Schwellenpegelsignal liefert;

—eine Summierungsschaltung (CS), die über die Umschalter (C1 bis C4) mit den Ausgängen der Summierungsregister (F1 bis F4) verbunden ist, eine Aufsummierung der an den Ausgängen der Summierungsregister (F1 bis F4) anliegenden Signale ausführt und Integrationsergebnisse liefert;

—eine Vergleichsschaltung (A5), die einerseits mit der Summierungsschaltung (CS) verbunden ist und die Integrationsergebnisse empfängt und andererseits mit der Schaltung (S1) zur Entwicklung der Schwellenpegelsignale verbunden ist und ein Ausgangssignal liefert, wenn ein Integrationsergebnis den der Anzahl der ein erfaßtes Summierungssignal geliefert habenden Impulsausgänge entsprechenden Wert des Schwellenpegels übersteigt;

—eine Steuereinheit (UC), die Steuersignale liefert und die Funktion des ersten Umschalters (M1), der Schaltung (S1) zur Entwicklung der Schwellenpegelsignale und der Summierungsschaltung (CS) steuert.

3. Schaltung zur adaptiven Postintegration bei einem Radargerät mit umgeschalteter Frequenz gemäß Anspruch 2, dadurch gekennzeichnet, daß es umfaßt:

—eine mit dem Ausgang eines jeden Summierungsregisters (F1 bis F4) verbundene Vergleichsschaltung (A1 bis A4), die den Schwellenpegel der Summierung mit dem gegebenen Pegel vergleicht und ein Steuersignal (0 oder 1) liefert, das die Folgefrequenzen angibt, für die eine Vorerfassung erfolgte;

—Umschalter (C1 bis C4), die jeweils durch ein Steuersignal gesteuert werden und die Ausgänge der Summierungsregister (F1 bis F4) mit der Summierungsschaltung (CS) zu verbinden erlauben;

—die Schaltung (S1) zur Entwicklung von Schwellenpegelsignalen, die gleichermaßen durch die Steuersignale der Vergleichsschaltungen (A1 bis A4) gesteuert wird und an einen Ausgang (S1) ein Signal liefert, dessen Pegel von der Anzahl der empfangenen Steuersignale abhängt, wobei der Ausgang (S1) mit der Vergleichsschaltung (A5) verbunden ist.

4. Schaltung zur adaptiven Postintegration bei einem Radargerät mit umgeschalteten Folgefrequenzen, mit $n$ Folgefrequenzen, mit Antennenempfangsschaltungen (E1), die an eine Ausgangsverbindung (10) ein Empfangssignal liefern, und mit einem ersten Umschalter (M1), der einen mit der Verbindung (10) der Empfangsschaltungen (E1) verbundenen Eingang und eine bestimmte Anzahl von jeweils einer Radarfolgefrequenz entsprechenden Ausgängen (11 bis 14) besitzt und der seinen Eingang mit dem der momentanen Folgefrequenz entsprechenden Ausgang (11 bis 14) zu verbinden erlaubt;

wobei die Adaptionsschaltung dadurch gekennzeichnet ist, daß sie umfaßt:

—ein jeweils mit einem Ausgang (11 bis 14) verbundenes und an einem Ausgang ein erstes Summierungssignal bereitstellendes Summierungsregister (F1 bis F4);

—eine Reihe von $n-1$ Summierungsschaltungen (CS1, CS2, CS3), die ebensoviele Eingänge besitzen wie Summierungsregister (F1 bis F4) vorhanden sind und die jeweils mit dem Ausgang eines Summierungsregisters verbunden sind, wobei eine Summierungsschaltung (CS1, CS2, CS3) vom Rang p, mit p variierend zwischen 2 und n, die Summe von $p$ Signalen unter den $n$ zweiten Summierungssignalen, die von den Summierungsregistern (F1 bis F4) geliefert werden, ausführt und auf diese Weise zweite Summierungssignale an

$$n(n-1)\ldots(n-p+1)/p!$$

Ausgänge liefert;

—Sätze von Vergleichsschaltungen (A11), die mit den Ausgängen einer jeden Summierungsschaltung (CS1, CS2, CS3) verbunden sind und jeder dieser Sätze ebensoviele Vergleichsschaltungen aufweist wie die entsprechende Summierungsschaltung Ausgänge besitzt, wobei die Vergleichsschaltungen eines Satzes andererseits ein Schwellenpegelsignal (S20, S30) empfangen, dessen Wert für den betrachteten Satz geeignet ist und die Funktion der Vergleichsschaltungen bestimmt, welche von den Summierungsschaltungen die zweiten Summierungssignale empfangen und dann jeweils ein Signal ausgeben, wenn das von ihr empfangene zweite Summierungssignal das Schwellenpegelsignal (S20, S30) übersteigt;

—einen Satz von $n$ Vergleichsschaltungen (A11), die jeweils mit einem Ausgang ($\Sigma1$ bis $\Sigma4$) eines Summierungsregisters (F1 bis F4) verbunden sind, wobei jede dieser Vergleichsschaltungen andererseits ein bestimmtes Schwellenpegelsignal (S10) empfängt, das deren Funktion ermöglicht, wenn das Summierungsregister am entsprechenden Ausgang ein erstes Summierungssignal mit einem über dem Schwellenpegel liegenden Pegel bereitstellt, und ein Signal ausgibt, wenn dieses zweite Summierungssignal dieses Schwellenpegelsignal (S10) übersteigt;

—ein logisches ODER-Glied, das mit allen Vergleichsschaltungen (A11) verbunden ist und ein

# EP 0 187 588 B1

Postintegrations-Ausgangssignal (AFF) liefert, wenn wenigstens eine Vergleichsschaltung arbeitet und ein Ausgangssignal ausgibt.

**Claims**

1. A method for adaption of post-integration in switched recurrent frequency radar, comprising n recurrent frequencies, in which at n connections ($\Sigma$1 through $\Sigma$4) detection signals are supplied for each recurrent frequency, characterized in that it comprises the following phases:
   —identification of the connections supplying a detection signal greater than a given threshold level;
   —summation of the detection signals with the exclusion of any signal present at a connection ($\Sigma$1 through $\Sigma$4) not supplying any detection signal;
   —processing a threshold level signal as a function of the number of identified connections; and
   —comparison of the signal resulting from the summation of the signals with the threshold level signal and the supply of an output signal when the said summation signal is greater than the threshold level signal.

2. A circuit for the adaption of post-integration in switched recurrent frequency radar, comprising antenna reception circuits (E1) supplying a received signal at an output connection (10),
   —and a first switch (M1) possessing an input connected with the connection (10) of the reception circuits (E1) and a given number of outputs (11 through 14) each corresponding to one recurrent radar frequency, said first switch (M1) making possible the connection of its input with the output (11 through 14) corresponding to the instant recurrent frequency, said adaption circuit being characterized in that it comprises:
   —a summation register (F1 through F4) connected with each output (11 through 14) and supplying a summation signal at each output;
   —second switches (C1 through C4), each second switch being connected with each summation register (F1 through F4) and being turned on when the corresponding summation register supplies a signal greater than a given level;
   —a processing circuit (S1) for threshold level signals and receiving the signals of inputs corresponding to the summation signals greater than the given level and supplying in exchange a threshold level signal corresponding to the number of the said input signals;
   —a summation circuit (CS) connected by the switches (C1 through C4) with the outputs of the summation registers (F1 through F4), performing a summation of the signals supplied at the outputs of the summation registers (F1 through F4) and supplying results of integration;
   —a comparison circuit (A5) connected on the one hand with the summation circuit CS, receiving the results of integration, and, on the other hand, with the processing circuit (S1) for threshold level signals, and supplying an output signal when the result of integration exceeds the value of the threshold value corresponding to the number of recurrent outputs having supplied a detected summation signal; and
   —a control unit (UC) supplying control signals and controlling the operation of the first switch (M1), of the processing circuit (S1) for threshold level signals and of the summation circuit (CS).

3. The circuit for the adaption of the post-integration in switched frequency radar as claimed in claim 2, characterized in that it comprises:
   —a comparison circuit (A1 through A4) connected with the output of each summation register (F1 through F4) and comparing the level of the summation signal with the given level and supplying a control signal (0 or 1) indicating the recurrent frequencies in respect of which there is detection; and
   —switches (C1 through C4) each controlled by a control signal and making possible the connection of the outputs of the summation registers (F1 through F4) with the summation circuit (CS); and
   —the circuit (S1) for the processing of threshold level signals being also controlled by control signals of comparison circuits (A1 through A4) and supplying at an output (S1) a signal whose level depends on the number of control signals received, said output (S1) being connected with the comparison circuit (A5).

4. A circuit for the adaption of post-integration in switched recurrent frequency radar comprising $n$ recurrent frequencies, comprising antenna reception circuits (E1) supplying a received signal at an output connection (10),
   —and a first switch (M1) possessing an input connected with the connection (10) of the reception circuits E1 and a given number of outputs (11 through 14) each corresponding to a recurrent frequency of the radar, the said first switch (M1) making possible the connection of its input with the output (11 through 14) corresponding to the instant recurrent frequency;
   the said adaption circuit being characterized in that it comprises:
   —a summation register (F1 through F4) connected with each output (11 through 14) and supplying at one output a first summation signal;
   —a series of n−1 summation circuits (CS1, CS2 and CS3) possessing as many inputs as there are summation registers (F1 through F4), each connected with the output of a summation register, a summation circuit (CS1, CS2 and CS3) of an order p, p varying between 2 and n, performing the summation of the $p$ signals among the $n$ second summation signals supplied by the summation registers (F1 through F4) and supplying thus second summation signals at

# EP 0 187 588 B1

$$\frac{n(n-1)\ldots(n-p+1)}{p!} \text{ outputs}$$

—comparison circuit groups (A11) connected with the outputs of each summation circuit (CS1, CS2 and CS3), each of these groups comprising as many comparison circuits as the there are outputs to the corresponding summation circuit, the comparison circuits of a group furthermore receiving a threshold level signal (S20 and S30), whose value is inherent in the group considered and determines the function of the said comparison circuits receiving from the summation circuits the second summation circuits and the each supplying a signal when the second summation signal which it receives, exceeds the threshold level signal (S20 and S30);

—a group of $n$ comparison circuits (A11) each connected with one output ($\Sigma 1$ through $\Sigma 4$) of a summation register (F1 through F4), each of the comparison circuits furthermore receiving a determined threshold level signal (S10) making possible its operation when the summation register is supplying, at a corresponding output, a first summation signal with a level greater than the threshold level and supplying a signal when this second summation signal exceeds the said threshold level signal (S10); and

—a logical OR gate connected with all the comparison circuits (A11) and supplying a post-integration output signal (AFF) when at least one comparison circuit is functioning and supplies an output signal.

# FIG_1

Atténuation

0 dB

0,2   0,5   0,8   1
      $F_R/2$        $F_R$

# FIG_2

ECHO

CAS 1   $F_4$  $F_1$  $F_2$  $F_3$

CAS 2   $F_3$  $F_4$  $F_1$  $F_2$

CAS 3   $F_2$  $F_3$  $F_4$  $F_1$

Sortie post
intégration
sur T

1

0,5

# FIG_3

Sortie post
intégration
sur T/2

1

0,5

# FIG_4

Post intégration
adaptée
aux cas 1.2.3

1

0,5

# FIG_5

# FIG_6

ECHO

CAS 4    $F_1$   $F_2$   $F_3$   $F_4$

# FIG_7

1

0,5

# FIG_8

1

0,5

Post intégration
adaptée
au cas 4

# FIG_9

1

0,5

# FIG_10

EP 0 187 588 B1

# FIG_11

FIG_12

sommateurs sur T/4

E1

M1

10

UC1

F1 (1)   $\Sigma_1$
F2 (2)   $\Sigma_2$
F3 (3)   $\Sigma_3$
F4 (4)   $\Sigma_4$

Multiplexeur

A 11

S10

CS1

SOMMES PARTIELLES

$\Sigma_1 + \Sigma_2$
$\Sigma_1 + \Sigma_3$
$\Sigma_1 + \Sigma_4$
$\Sigma_2 + \Sigma_3$
$\Sigma_2 + \Sigma_4$
$\Sigma_3 + \Sigma_4$

UC2

S20

S1

S10 S20 S30 S40

UC

UC1   UC2

CS2

$\Sigma_1 + \Sigma_2 + \Sigma_3$
$\Sigma_1 + \Sigma_2 + \Sigma_4$
$\Sigma_1 + \Sigma_3 + \Sigma_4$
$\Sigma_2 + \Sigma_3 + \Sigma_4$

UC2

CS3

UC2

S30

S40

$\Sigma_1 + \Sigma_2 + \Sigma_3 + \Sigma_4$

AFF

OU
+
(OU)
Logique

EP 0 187 588 B1